# EUROPEAN PATENT APPLICATION

(11) **EP 4 759 379 A1**
(43) Date of publication of application: **17.06.2026**
(21) Application number: 25212227.0
(22) Date of filing: 30.10.2025
(51) Int. Cl.: A62C 3/16, H01M 50/204

(54) **ENERGY STORAGE SYSTEM**

(30) Priority: 12.12.2024 KR 20240184710
(71) Applicant: SAMSUNG SDI CO., LTD., Yongin-si, Gyeonggi-do 17084 (KR)
(72) Inventor: NA, Donju, 17084 Yongin-si, Gyeonggi-do (KR)
(74) Representative: Gulde & Partner

(57) **Abstract**

According to an embodiment, an energy storage system (10) includes a plurality of enclosures (100, 100a, 100b), each of the enclosures (100, 100a, 100b) being configured to accommodate a battery rack (120); and a plurality of fire extinguishing devices (200) respectively corresponding to the enclosures (100, 100a, 100b). Each of the fire extinguishing devices (200) includes a fire extinguishing pipe (210) extending around an upper edge of a corresponding one of the enclosures (100, 100a, 100b), and each of the fire extinguishing pipes (210) includes a plurality of fire extinguishing nozzles (2100) spaced apart from each other. The fire extinguishing pipes (210) are configured to spray cooling water onto an outer surface of the corresponding one of the enclosures (100, 100a, 100b) through the fire extinguishing nozzles (2100).

## Description

### BACKGROUND

### 1. Field

Aspects of embodiments of the present disclosure relate to an energy storage system.

### 2. Description of the Related Art

An energy storage system is a system that integrates batteries to facilitate battery storage and management. Energy storage devices may be used as backup power for renewable energy sources and as emergency power in homes, factories, and businesses. As power consumption increases, the need to develop technologies for energy storage devices to enhance battery efficiency and facilitate storage is growing.

The above information disclosed in the background section of the present disclosure is intended to improve understanding of the background of the present disclosure and, therefore, may include information that does not constitute the related (or prior) art.

### SUMMARY

Embodiments of the present disclosure provide an energy storage system exhibiting improved stability. However, aspects and features of the present disclosure are not limited to those described above, and other aspects and features of the present disclosure that are not mentioned can be understood by the following description and will be more clearly understood by the description of embodiments of the present disclosure. In an embodiment, it will be appreciated that the aspects and features of the present disclosure can be realized by the means and combinations thereof indicated in the patent claims and equivalents thereof.

An energy storage system, according to an embodiment of the present disclosure, includes a plurality of enclosures, each of which is configured to accommodate a (or at least one) battery rack, and fire extinguishing devices respectively corresponding to (e.g., arranged in) each of the enclosures. Each of the fire extinguishing devices includes a fire extinguishing pipe extending around (or arranged to surround) an upper edge of a corresponding enclosure. The fire extinguishing pipe includes a plurality of fire extinguishing nozzles spaced apart from each other and is configured to spray cooling water onto an outer surface of the corresponding enclosure through the fire extinguishing nozzles.

In an embodiment, each of the enclosures may include a fire alarm receiver panel configured to sense a fire signal, and to transmit and receive the fire signal.

In an embodiment, the plurality of enclosures may be arranged in a grid pattern, and the enclosures may transmit and receive fire status information with one another through the fire alarm receiver panels.

In an embodiment, the fire extinguishing devices of enclosures adjacent to an enclosure in which a fire has occurred may operate.

In an embodiment, the adjacent enclosures may be adjacent to four sides of the enclosure in which a fire has occurred.

In an embodiment, the cooling water may be sprayed at an angle in a range of 30° to 60° relative to a top surface of the corresponding enclosure.

In an embodiment, the extinguishing pipe may have a blocked portion at one end.

In an embodiment, the fire extinguishing device may further include a pump.

In an embodiment, the spacing between adjacent ones of the enclosures may be shorter than a length of each of the enclosures.

In an embodiment, the fire extinguishing device may further include a plurality of support members, the support members may be configured to secure the fire extinguishing pipe to a top surface of the corresponding enclosure.

An energy storage system, according to another embodiment of the present disclosure, includes a plurality of enclosures, each of which is configured to accommodate a (or at least one) battery rack, and fire extinguishing devices respectively corresponding to (e.g., arranged in) each of the enclosures. Each of the fire extinguishing devices includes a fire extinguishing pipe extending around (or arranged to surround) an upper edge of a corresponding one of the enclosures and a pump. The fire extinguishing pipe includes a plurality of fire extinguishing nozzles spaced apart from each other and is configured to spray cooling water onto an outer surface of the corresponding enclosure through the fire extinguishing nozzles. The plurality of enclosures are arranged in a grid pattern, and the fire extinguishing devices of enclosures adjacent to an enclosure in which a fire has occurred may operate together.

In an embodiment, the enclosures may be configured to transmit and receive fire status information with one another (e.g., through fire alarm receiver panels).

In an embodiment, the cooling water may be sprayed at an angle in a range of 30° to 60° relative to a top surface of the corresponding enclosure.

In an embodiment, the fire extinguishing device may be connected to a water tank configured to store the cooling water.

In an embodiment, the fire extinguishing pipe may extend along an outermost edge of the upper portion of the corresponding enclosure.

In an embodiment, the fire extinguishing device may further include a transfer pipe configured to transport cooling water. One end of the transfer pipe may be connected to the fire extinguishing pipe, and the other end of the transfer pipe may be connected to the pump.

In an embodiment, a diameter of the fire extinguishing pipe may be in a range of 10 mm to 30 mm.

In an embodiment, the fire extinguishing device may further include a plurality of support members, the support members may be configured to fix the fire extinguishing pipe to the corresponding enclosure.

In an embodiment, one end of each support member may be attached to the upper portion of the enclosure, and the other end may be joined to the fire extinguishing pipe.

In an embodiment, the support members may be bent outwardly from an upper surface of the enclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

FIG. 1 is a schematic perspective view of an energy storage system according to an embodiment.
FIG. 2 is a schematic perspective view of an enclosure and a fire extinguishing device of the energy storage system shown in FIG. 1 according to an embodiment.
FIG. 3 is a schematic cross-sectional view of an interior of the enclosure shown in FIG. 1.
FIG. 4 is a schematic perspective view of the rack arrangement shown in FIG. 3.
FIG. 5 is a schematic plan view of the fire extinguishing device shown in FIG. 2.
FIG. 6 is a schematic enlarged view of the region X in FIG. 5.
FIG. 7 is a schematic enlarged view of the region Y in FIG. 5.
FIG. 8 is a schematic enlarged view of the region Z in FIG. 5.
FIG. 9 is a schematic cross-sectional view taken along the line A-A' in FIG. 2.
FIG. 10 is a schematic enlarged view of the region X' in FIG. 9.
FIG. 11 is a schematic perspective view of an energy storage system according to an embodiment.
FIG. 12 is a schematic perspective view of an energy storage system according to an embodiment.
FIG. 13 is a schematic perspective view of an energy storage system according to an embodiment.

### DETAILED DESCRIPTION

The present disclosure can undergo various modifications and has various embodiments, and example embodiments are illustrated in the drawings and described, in detail, in the detailed description. However, the present disclosure is not limited to the embodiments described herein, but the present disclosure should be understood to include all transformations, equivalents, or substitutes included in the technical scope of the present disclosure as defined by the appended claims. In explaining the present disclosure, if it is determined that a detailed description of a related known technology may obscure the gist of the present disclosure, the description thereof may be omitted or simplified.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

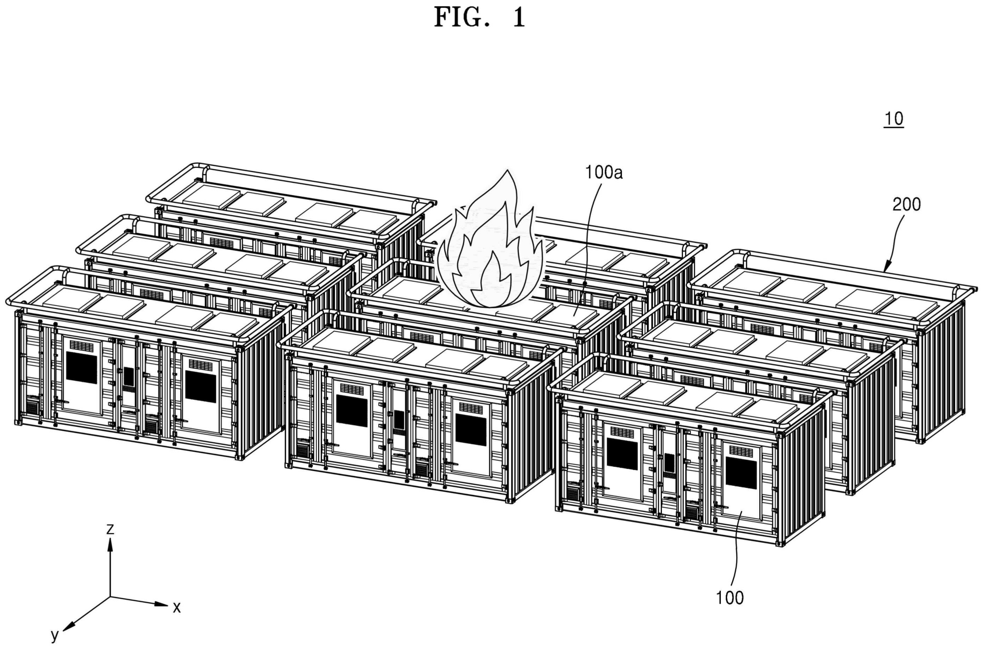

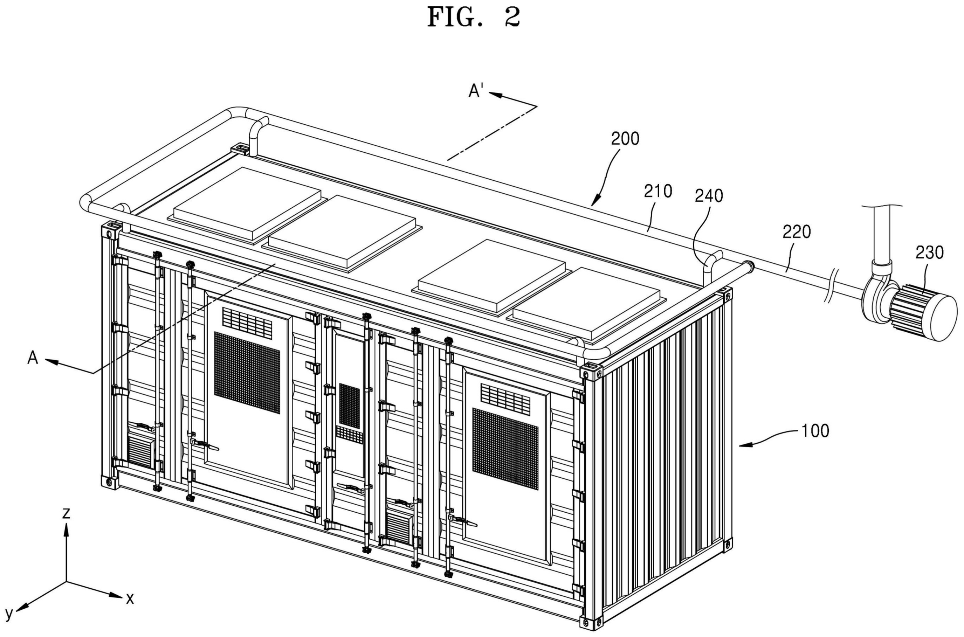

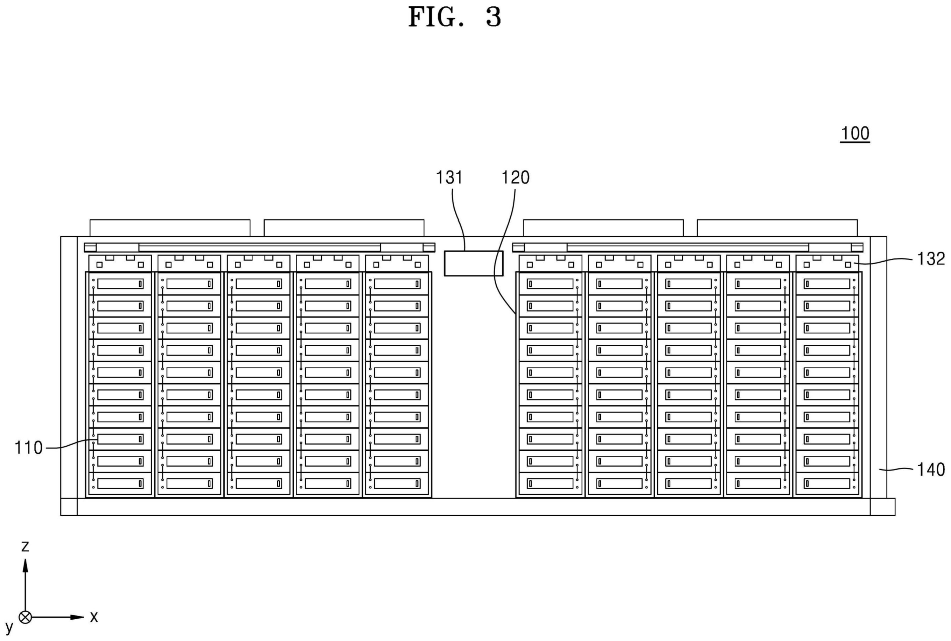

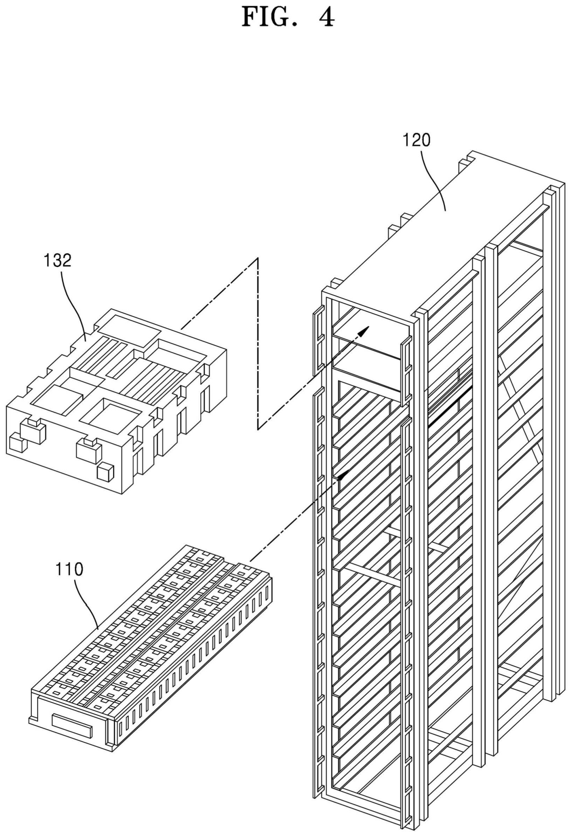

FIG. 1 is a schematic perspective view of an energy storage system according to an embodiment, FIG. 2 is a schematic perspective view of an enclosure and a fire extinguishing device of the energy storage system shown in FIG. 1 according to an embodiment, FIG. 3 is a schematic cross-sectional view of an interior of the enclosure shown in FIG. 1, and FIG. 4 is a schematic perspective view of the rack arrangement shown in FIG. 3.

Referring to FIGS. 1 to 4, an energy storage system 10, according to an embodiment of the present disclosure, may include enclosures 100, each accommodating at least one battery rack 120, and fire extinguishing devices 200 arranged in each of the enclosures 100.

The enclosures 100 may have a container shape and may accommodate a plurality of battery modules 110 and the battery rack 120 accommodating the battery modules 110 (e.g., at where the battery modules 110 are loaded).

Additionally, the enclosures 100 may each have at least one or more battery racks 120 arranged side-by-side in a first direction x and may be configured to store a number of battery modules 110.

The battery modules 110 loaded onto each battery rack 120 may be electrically connected to one another.

For example, the plurality of battery modules 110 arranged in a single battery rack 120 may be connected to each other in series via a bus bar.

Each battery module 110 may be stacked in a second direction z and electrically connected to one another via a bus bar in the second direction z, and a plurality of connected battery modules 110 collectively form a single battery rack 120. A plurality of such battery racks 120 may be arranged and connected to form an enclosure 100, which is a large-scale battery storage device, such as an energy storage system (ESS).

The enclosure 100 may include a battery management system 132 configured to collect and manage status information of the battery modules 110, such as the voltage and/or temperature.

In an embodiment, a plurality of enclosures 100 may be arranged to form a large-scale energy storage system 10. In some embodiments, the plurality of enclosures 100 may be arranged in a grid pattern to form the energy storage system 10.

The battery modules 110 may generate heat during charging and discharging processes. If excess heat accumulates due to charging, discharging, or overcurrent, the performance of the battery modules 110 may deteriorate, and thermal runaway may occur in the battery modules 110.

If thermal runaway occurs in any one of the battery modules 110, flames may erupt at the affected battery module 110 and may spread to neighboring battery modules 110, leading to thermal propagation between the battery modules 110, which may escalate into a large-scale fire. In the case of a large-scale battery storage device, such as the energy storage system 10, thermal propagation may also occur between enclosures 100.

Fire extinguishing devices 200 may be included at an upper portion of the enclosures 100 to mitigate the issue of thermal propagation between enclosures 100.

For example, each of the fire extinguishing devices 200 may include a fire extinguishing pipe 210 arranged to surround (e.g., to extend around) the upper edge of the corresponding enclosure 100 from among the enclosures 100.

The fire extinguishing pipe 210 may include (e.g., may be formed of) a flame-retardant material. This allows the fire extinguishing pipe 210 to continuously supply cooling water without being easily damaged by a fire in the enclosure 100.

For example, the fire extinguishing pipe 210 may include, but is not limited to, a PVC material.

The fire extinguishing pipe 210 may extend along the upper surface of the enclosure 100. For example, the fire extinguishing pipe 210 may be formed along the outermost edge (e.g., a peripheral edge) of the upper portion of the enclosure 100.

The length of the fire extinguishing pipe 210 may be adjustable depending on the length of the upper edge of the enclosure 100.

The fire extinguishing pipe 210 may be configured to match (e.g., to correspond to) the upper portion of the enclosure 100.

The fire extinguishing device 200 may further include a plurality of support members 240 for securing the fire extinguishing pipe 210 to the top surface of the enclosure 100.

In an embodiment, one end of each support member 240 may be attached to the upper portion (e.g., the upper surface) of the enclosure 100, while the other end may be joined to the fire extinguishing pipe 210.

A plurality of support members 240 may be connect the fire extinguishing device 200 to the enclosure 100. The support members 240 may determine the spacing distance between the enclosure 100 and the fire extinguishing device 200.

In the case of a fire-affected enclosure 100a, the outer surface of the fire-affected enclosure 100a reaches a high temperature. The support members 240 provide a spacing distance between the fire extinguishing device 200 and the upper portion of the enclosure 100, separating the fire extinguishing device 200 from the high-temperature upper portion of the fire-affected enclosure 100a and protecting the fire extinguishing pipe 210 from the high-temperature upper surface of the fire-affected enclosure 100a.

In some embodiments, the support members 240 may be bent outwardly from the upper surface of the enclosure 100.

The support members 240 determine the position and angle of the fire extinguishing pipe 210 for cooling all four lateral side surfaces of the enclosure 100. By bending one end of each of the support members 240 outwardly from the upper surface of the enclosure 100, cooling water may be directed to flow along the outer surface of the enclosure 100.

Each of the enclosures 100 may include at least one fire alarm receiver panel 131 configured to sense a fire signal, and to transmit and receive the fire signal.

In an embodiment, the enclosures 100 may transmit and receive fire status information with one another through the fire alarm receiver panels.

The fire alarm receiver panel 131 may be located inside the enclosure 100 and may include a heat sensor, a relay, a signal transmitter, a sound device, and the like.

The relay in the fire alarm receiver panel 131 may receive a fire signal input through the heat sensor.

In an embodiment, each fire alarm receiver panel 131 may be interconnected via a signal transmitter so that the fire alarm receiver panels 131 installed in other enclosures 100 can all confirm the fire status and alert regarding the fire by generating warnings and noise through a built-in sound device (e.g., a speaker).

When the fire detector in the fire alarm receiver panel 131 detects a fire and sends a fire signal to the relay, the relay may transmit the fire signal through communication lines to the fire alarm receiver panels 131 of other enclosures 100.

In an embodiment, the fire alarm receiver panel 131 may recognize (e.g., may have stored in a memory) the positional relationship between the enclosures 100 and may be connected to the fire extinguishing device 200 via a communication bus or electrically, thereby allowing the fire extinguishing device 200 to automatically operate in the event of a fire.

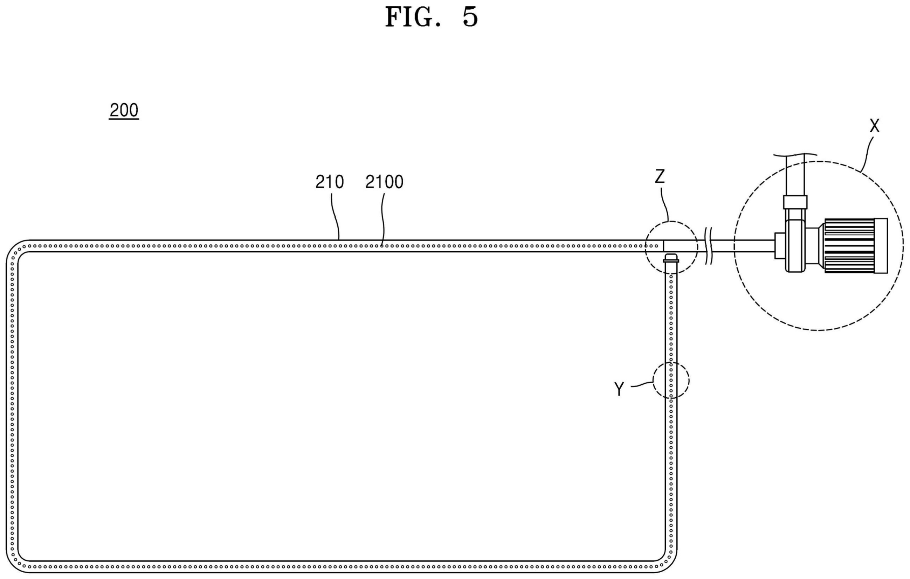

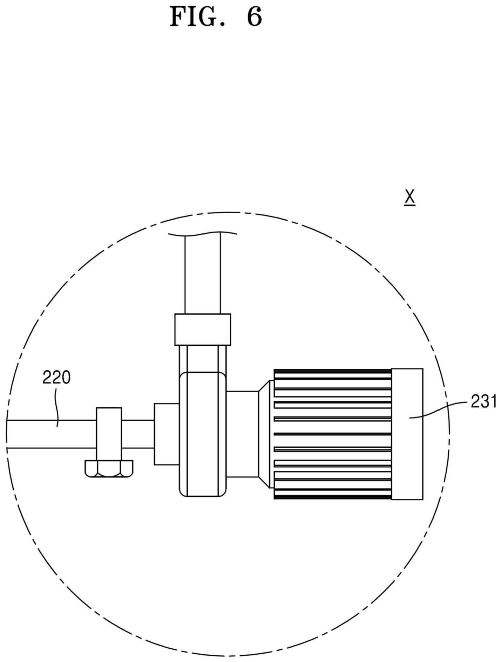

FIG. 5 is a schematic plan view of the fire extinguishing device shown in FIG. 2, and FIG. 6 is a schematic enlarged view of the region X in FIG. 5.

Referring to FIGS. 5 and 6, the fire extinguishing pipe 210 may include a plurality of fire extinguishing nozzles 2100 spaced apart from each other and may spray cooling water onto the outer surface of the enclosure (see, e.g., 100 in FIG. 1) through the fire extinguishing nozzles 2100.

The plurality of fire extinguishing nozzles 2100 may be spaced apart from one another at equal (or regular) intervals to spray cooling water onto the outer surface of the enclosure (see, e.g., 100 in FIG. 1).

In some embodiments, the fire extinguishing nozzles 2100 are located on (or in) a lower surface of the fire extinguishing pipe 210, and cooling water can be discharged through the fire extinguishing nozzles 2100.

In an embodiment, the fire extinguishing nozzles 2100 may be formed in the shape of rods with through-holes or in the shape of holes positioned on (e.g., formed in) one surface of the fire extinguishing pipe but are not limited thereto.

The fire extinguishing device 200 may further include a pump 231. Additionally, the fire extinguishing device 200 may include a transfer pipe 220 configured to transport cooling water, and one end of the transfer pipe 220 may be connected to the fire extinguishing pipe 210, and the other end of the transfer pipe 220 may be connected to the pump 231.

The pump 231 may provide the power to move (e.g., to pressurize) cooling water, enabling the fire extinguishing device 200 to operate. When the fire alarm receiver panel (see, e.g., 131 in FIG. 3) detects a fire signal and transmits the fire signal to each enclosure (see, e.g., 100 in FIG. 1), the pump 231 may operate to move the cooling water.

In an embodiment, one end of the transfer pipe 220 may be connected to the fire extinguishing pipe 210, and the other end of the transfer pipe 220 is connected to the pump 231 such that the transfer pipe 220 transports cooling water from the pump 231 to the fire extinguishing pipe 210.

The transfer pipe 220 may be made of the same material as the fire extinguishing pipe 210 and may have the same shape as the fire extinguishing pipe 210, excluding the plurality of fire extinguishing nozzles 2100. Additionally, the transfer pipe 220 may have the same diameter as the fire extinguishing pipe 210 and may be joined or integrally formed with the fire extinguishing pipe 210.

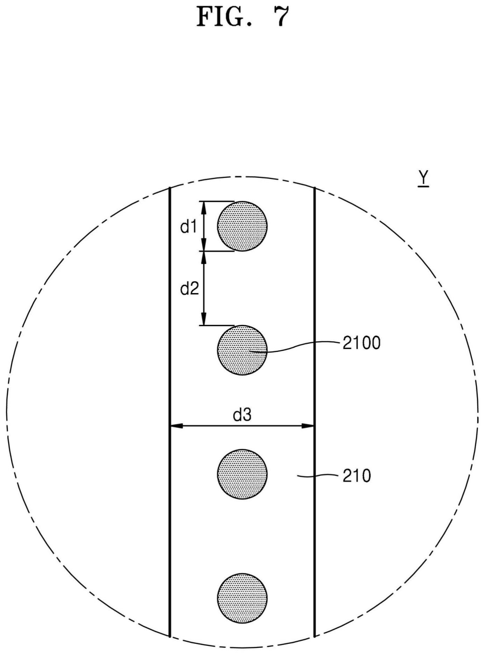

FIG. 7 is a schematic enlarged view of the region Y in FIG. 5.

Referring to FIGS. 5 and 7, the plurality of fire extinguishing nozzles 2100 may be arranged at equal intervals, and each of the fire extinguishing nozzles 2100 may have the same diameter.

In some embodiments, the fire extinguishing nozzles 2100 may spray the same or substantially the same amount of cooling water onto the outer surface of the enclosure (see, e.g., 100 in FIG. 1), and the fire extinguishing pipe 210 and the transfer pipe (see, e.g., 220 in FIG. 6) may have the same diameter.

A diameter d1 of the fire extinguishing nozzles 2100 may be in a range of about 1 mm to about 2 mm.

If the diameter d1 of the fire extinguishing nozzles 2100 is less than about 1 mm, the fire extinguishing nozzles 2100 may be too small, resulting in insufficient cooling water being sprayed, and tension between water molecules may clog the fire extinguishing nozzles 2100, preventing cooling water from being sprayed. If the diameter d1 is greater than or equal to about 2 mm, an excessive amount of cooling water may be sprayed from each fire extinguishing nozzle 2100, leading to the use of more cooling water than necessary.

A spacing distance d2 between adjacent ones of the fire extinguishing nozzles 2100 may be in a range of about 5 mm to about 15 mm.

If the spacing distance d2 between the fire extinguishing nozzles 2100 is less than about 5 mm, the spacing distance d2 may be too narrow, causing the cooling water sprayed from each fire extinguishing nozzle 2100 to interfere with one another. As a result, more cooling water may be required to cover the same outer surface of the enclosure (see, e.g., 100 in FIG. 1).

If the spacing distance d2 between the fire extinguishing nozzles 2100 is greater than or equal to about 15 mm, the spacing distance D2 may be too wide, and thus, the outer surface of the enclosure 100 may not be sufficiently covered by the cooling water.

In some embodiments, a diameter d3 of the fire extinguishing pipe 210 may be in a range of about 10 mm to about 30 mm.

If the diameter d3 of the fire extinguishing pipe 210 is less than about 10 mm, the amount of cooling water transported within the fire extinguishing pipe 210 may be insufficient, resulting in inadequate spraying of cooling water onto the outer surface of the enclosure (see, e.g., 100 in FIG. 1), which may lead to reduced cooling performance and the cooling water not being evenly distributed across the entire fire extinguishing pipe 210.

If the diameter d3 of the fire extinguishing pipe 210 exceeds about 30 mm, the amount of cooling water transported within the fire extinguishing pipe 210 may be excessively large, which may result in a waste of cooling water.

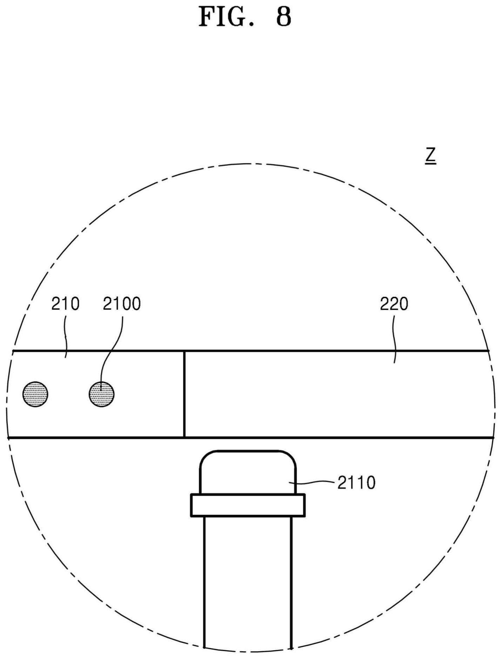

FIG. 8 is a schematic enlarged view of the region Z in FIG. 5.

Referring to FIGS. 5 and 8, the fire extinguishing pipe 210 may have a blocked portion 2110 at one end.

The fire extinguishing pipe 210 may be configured as an open-loop structure, in which one end is not connected to the other end, and the blocked portion 2110 formed at the one end may control (e.g., may stop) the flow of cooling water.

The blocked portion 2110 may be formed in a blocked shape by being integrally formed with the fire extinguishing pipe 210 (e.g., the pipe itself may be integrally blocked) at one end or may have a cap or the like to adjust the amount of cooling water by opening or closing the end.

In some embodiments, the fire extinguishing pipe 210 may begin at where it enters (e.g., begins to extend around) the upper surface of the enclosure (see, e.g., 100 in FIG. 1). Until the cooling water enters the upper surface of the enclosure (see, e.g., 100 in FIG. 1), the cooling water may be transported through the transfer pipe 220.

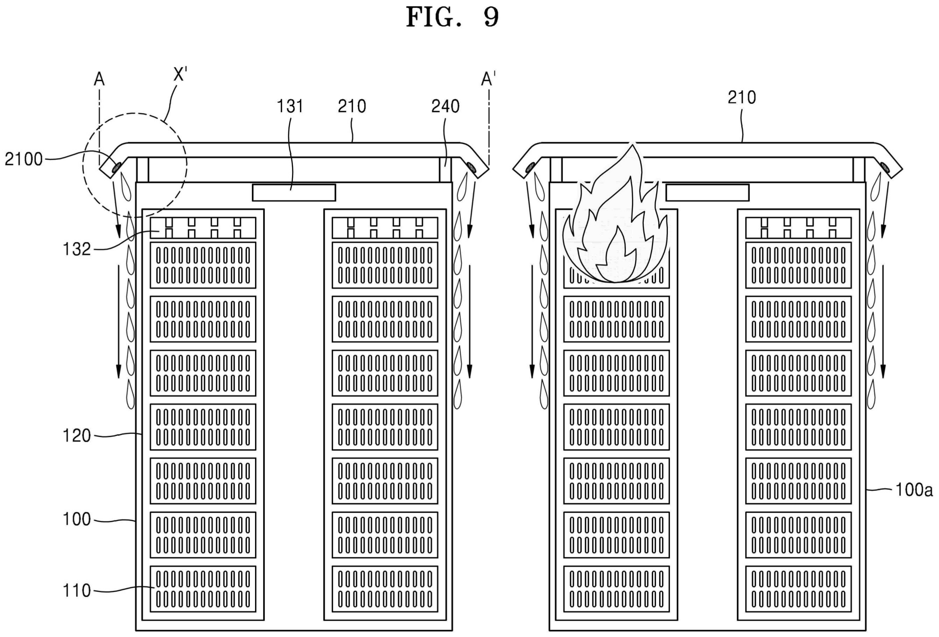

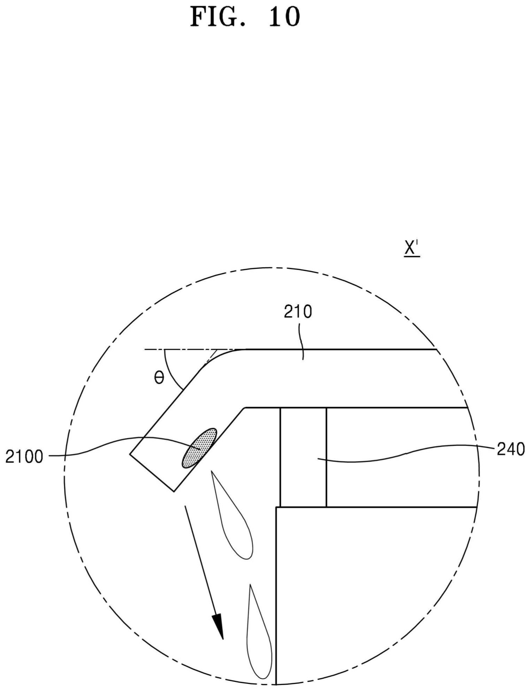

FIG. 9 is a schematic cross-sectional view taken along the line A-A' in FIG. 2, and FIG. 10 is a schematic enlarged view of the region X' in FIG. 9.

Referring to FIGS. 9 and 10, the cooling water may be sprayed at an angle θ of 30° to 60° relative to a top surface of the enclosure 100.

To allow the cooling water to flow on (or to flow along) the outer surfaces of the enclosures 100, the cooling water may be sprayed at an angle θ of about 30° to about 60°.

To achieve this, various methods may be employed, such as configuring the fire extinguishing pipe 210 to be tilted outwardly (and/or downwardly) from the enclosure 100, tilting the fire extinguishing nozzles 2100 themselves to create an angle θ, or tilting the support members 240 to incline the fire extinguishing nozzles 2100 at an angle θ, but the methods are not limited thereto.

Through this, cooling water may flow on the outer surfaces of the enclosures 100, forming a water film that prevents heat propagation from the fire-affected enclosure 100 to the neighboring enclosures 100.

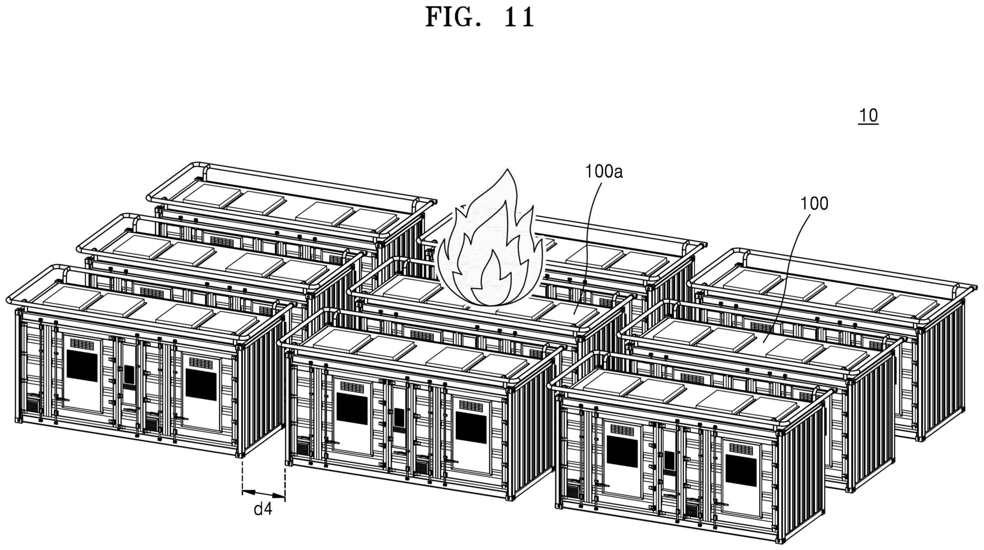

FIG. 11 is a schematic perspective view of an energy storage system according to an embodiment.

Referring to FIG. 11, a spacing d4 between adjacent ones of the enclosures 100 may be shorter than a length of each enclosure 100.

Typically, in a conventional energy storage system, the spacing between adjacent enclosures is equal to a length of the enclosures to prevent heat propagation therebetween.

However, according to embodiments of the present disclosure, cooling water is sprayed onto the outer surface of the enclosure 100 by using the fire extinguishing device 200 and a water film is formed thereon, thereby preventing heat propagation between neighboring enclosures 100. Accordingly, the spacing d4 between the enclosures 100 may be reduced compared to a conventional system.

Therefore, the overall area occupied by the energy storage system 10 may be reduced, allowing more enclosures 100 to be arranged within the same area compared to conventional systems, which allows for the construction of an energy storage system 10 having higher energy density.

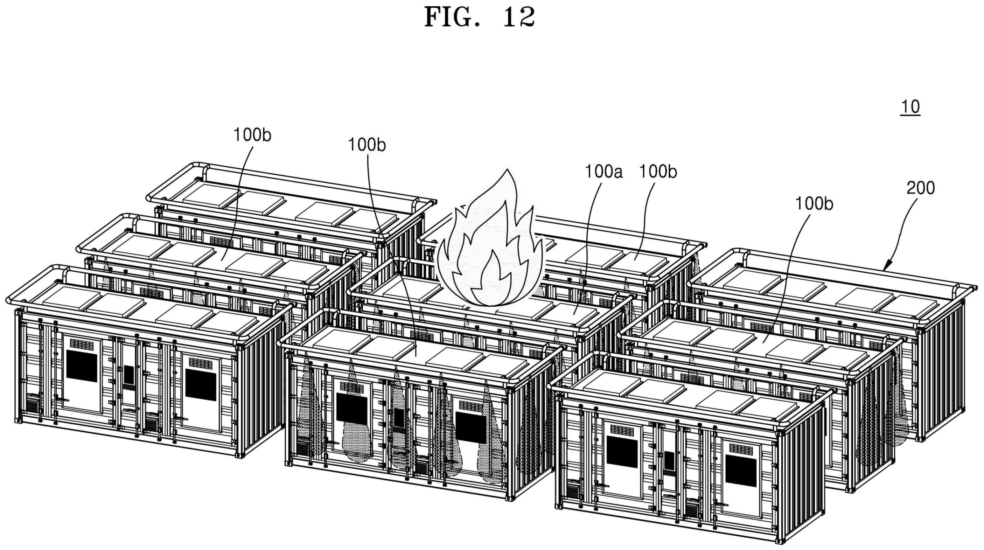

FIG. 12 is a schematic perspective view of an example of the energy storage system of FIG. 1.

Referring to FIG. 12, fire extinguishing devices 200 of enclosures 100b adjacent to a fire-affected enclosure 100a in which a fire has occurred from among the enclosures 100 may operate.

When a fire occurs in the fire-affected enclosure 100a and a fire signal is detected by a fire alarm receiver panel (see, e.g., 131 in FIG. 3), not only the fire extinguishing device 200 of the fire-affected enclosure 100a but also the fire extinguishing devices 200 of other adjacent enclosures 100b may operate.

For example, the other enclosures 100b may include the enclosures 100b adjacent to the four sides of the fire-affected enclosure 100a.

Through this, heat propagation from the fire-affected enclosure 100a to the adjacent enclosures 100b may be more effectively prevented.

This may enable the fire in the fire-affected enclosure 100a to be extinguished while ensuring that the interior of the adjacent enclosures 100b does not exceed a certain temperature and may allow a temperature to be maintained below the ignition point of the battery modules (see, e.g., 110 in FIG. 3) stacked inside the adjacent enclosures 100b, thereby preventing thermal runaway and heat propagation of the adjacent battery modules (see, e.g., 110 in FIG. 3).

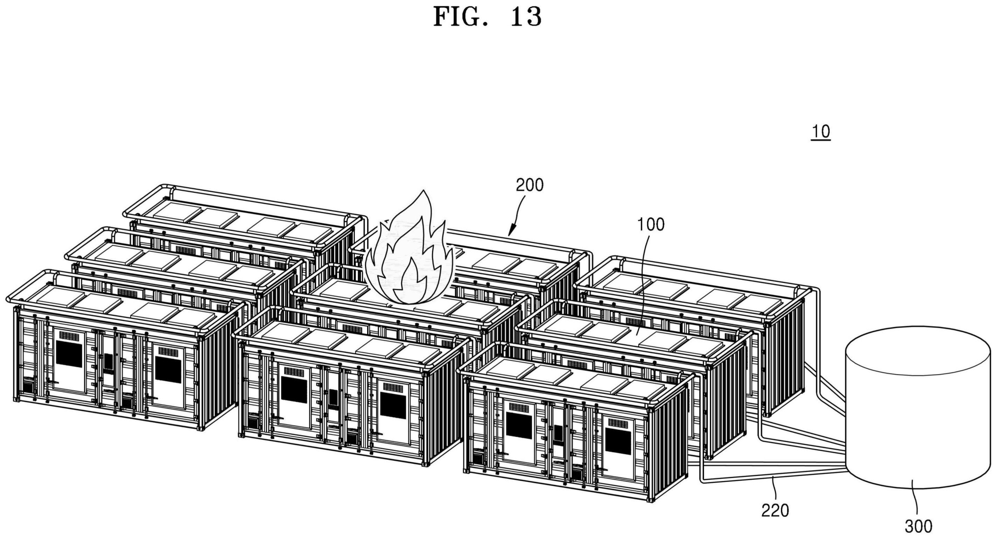

FIG. 13 is a schematic perspective view of an energy storage system according to an embodiment.

The fire extinguishing device 200 may be connected to a water tank 300 configured to store the cooling water. To ensure the smooth operation of cooling water during a fire, the fire extinguishing device 200 may be connected to the water tank 300 and may utilize the cooling water as needed.

The water tank 300 may be connected to a water source, such as an externally installed water tank, a reservoir, or a municipal water system but is not limited to these examples.

The water tank 300 may transport the cooling water via the transfer pipe 220, the pump (see, e.g., 231 in FIG. 6) is placed at one end of the transfer pipe 220, and another transfer pipe 220 is connected to one end of the pump (see, e.g., 231 in FIG. 6). Starting from the area entering the upper enclosure 100, the fire extinguishing pipe (see, e.g., 210 in FIG. 5) may be formed.

Although the present disclosure has been described above with reference to the embodiments illustrated in the drawings, these are merely examples, and those skilled in the art will understand that various modifications and equivalent other embodiments are possible. Therefore, the technical scope of the present disclosure should be determined by the technical idea of the appended patent claims and their equivalents.

The energy storage system according to embodiments of the present disclosure can prevent flames from spreading to adjacent enclosures even if thermal runaway occurs in any one enclosure, thereby enhancing the stability of the energy storage system.

## Claims

1. An energy storage system (10) comprising:
a plurality of enclosures (100, 100a, 100b), each of the enclosures (100, 100a, 100b) being configured to accommodate a battery rack (120); and
a plurality of fire extinguishing devices (200) respectively corresponding to the enclosures (100, 100a, 100b), each of the fire extinguishing devices (200) comprising a fire extinguishing pipe (210) extending around an upper edge of a corresponding one of the enclosures (100, 100a, 100b),
wherein each of the fire extinguishing pipes (210) comprises a plurality of fire extinguishing nozzles (2100) spaced apart from each other and is configured to spray cooling water onto an outer surface of the corresponding one of the enclosures (100, 100a, 100b) through the fire extinguishing nozzles (2100).

2. The energy storage system (10) as claimed in claim 1, wherein each of the enclosures (100, 100a, 100b) comprises a fire alarm receiver panel (131) configured to sense a fire signal, and to transmit and receive the fire signal.

3. The energy storage system (10) as claimed in claim 2, wherein the enclosures (100, 100a, 100b) are arranged in a grid pattern, and
wherein the enclosures (100, 100a, 100b) are configured to transmit and receive fire status information with one another through the fire alarm receiver panels (131).

4. The energy storage system (10) as claimed in any one of the preceding claims, wherein the fire extinguishing devices (200) of ones of the enclosures (100, 100a, 100b) adjacent to one of the enclosures (100a) in which a fire has occurred operate.

5. The energy storage system (10) as claimed in claim 4, wherein the adjacent ones of the enclosures (100b) are the enclosures (100b) adjacent to four sides of the one enclosure (100, 100a) in which a fire has occurred.

6. The energy storage system (10) as claimed in any one of the preceding claims, wherein the cooling water is sprayed at an angle (θ) in a range of 30° to 60° relative to a top surface of the corresponding one of the enclosures (100, 100a, 100b).

7. The energy storage system (10) as claimed in any one of the preceding claims, wherein each of the fire extinguishing pipes (210) comprises a blocked portion (2110) at one end.

8. The energy storage system (10) as claimed in any one of the preceding claims, wherein each of the fire extinguishing devices (200) further comprises a pump (231).

9. The energy storage system (10) as claimed in any one of the preceding claims, wherein spacing (d4) between the enclosures (100, 100a, 100b) is shorter than a length of each of the enclosures (100, 100a, 100b).

10. The energy storage system (10) as claimed in any one of the preceding claims, wherein each of the fire extinguishing devices (200) further comprises a plurality of support members (240) securing the fire extinguishing pipe (210) to a top surface of the corresponding enclosure (100, 100a, 100b).

11. The energy storage system (10) as claimed in any one of the preceding claims, wherein the fire extinguishing pipe (210) extends along an outermost edge of an upper portion of the corresponding enclosure (100, 100a, 100b).

12. The energy storage system (10) as claimed in any one of the preceding claims, wherein the fire extinguishing device (200) further comprises a transfer pipe (220) configured to transport cooling water,
wherein one end of the transfer pipe (220) is connected to the fire extinguishing pipe (210), and the other end of the transfer pipe (220) is connected to the pump (231).

13. The energy storage system (10) as claimed in any one of the preceding claims, wherein a diameter of the fire extinguishing pipe (210) is in a range of 10 mm to 30 mm.

14. The energy storage system (10) as claimed in any one of the preceding claims, wherein the fire extinguishing device (200) further comprises a plurality of support members (240) securing the fire extinguishing pipe (210) to the corresponding enclosure (100, 100a, 100b).

15. The energy storage system (10) as claimed in claim 14, wherein the support members (240) are bent outwardly from an upper surface of the corresponding enclosure (100, 100a, 100b).
